(19) Europäisches Patentamt
European Patent Office
Office européen des brevets

(11) **EP 3 418 107 B1**

(12) **EUROPÄISCHE PATENTSCHRIFT**

(45) Veröffentlichungstag und Bekanntmachung des Hinweises auf die Patenterteilung:
**22.09.2021 Patentblatt 2021/38**

(21) Anmeldenummer: **18170963.5**

(22) Anmeldetag: **07.05.2018**

(51) Int Cl.:
*H02J 7/00* *(2006.01)*          *B60H 1/00* *(2006.01)*
*H01M 10/625* *(2014.01)*      *H01M 10/633* *(2014.01)*
*H01M 10/613* *(2014.01)*

(54) **VERFAHREN UND BATTERIEMANAGEMENTSYSTEM ZUM BETREIBEN EINER TRAKTIONSBATTERIE IN EINEM KRAFTFAHRZEUG SOWIE KRAFTFAHRZEUG MIT EINEM DERARTIGEN BATTERIEMANAGEMENTSYSTEM**

METHOD AND BATTERY MANAGEMENT SYSTEM FOR OPERATING A TRACTION BATTERY IN A MOTOR VEHICLE AND MOTOR VEHICLE COMPRISING A SUCH BATTERY MANAGEMENT SYSTEM

PROCÉDÉ ET SYSTÈME DE GESTION DE BATTERIE DESTINÉS À FAIRE FONCTIONNER UNE BATTERIE DE TRACTION DANS UN VÉHICULE AUTOMOBILE AINSI QUE VÉHICULE AUTOMOBILE DOTÉ D'UN TEL SYSTÈME DE GESTION DE BATTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2017 DE 102017210303**

(43) Veröffentlichungstag der Anmeldung:
**26.12.2018 Patentblatt 2018/52**

(73) Patentinhaber: **AUDI AG**
**85045 Ingolstadt (DE)**

(72) Erfinder: **Zhou, Wei**
**85051 Ingolstadt (DE)**

(56) Entgegenhaltungen:
**EP-A1- 2 177 389      EP-A1- 2 529 979**
**EP-A1- 2 798 695**

**Beschreibung**

Die Erfindung betrifft ein Verfahren zum Betreiben einer Traktionsbatterie in einem Kraftfahrzeug gemäß dem Oberbegriff des Patentanspruchs 1. Des Weiteren betrifft die Erfindung ein Batteriemanagementsystem zum Betreiben einer Traktionsbatterie in einem Kraftfahrzeug gemäß dem Oberbegriff des Patentanspruchs 9. Überdies betrifft die Erfindung ein Kraftfahrzeug mit einem derartigen Batteriemanagementsystem.

Moderne Kraftfahrzeuge können als reine Elektrofahrzeuge oder als Hybridfahrzeuge mit einem elektrochemischen Energiespeicher zur Bereitstellung zumindest eines Teils der Antriebsleistung ausgestattet sein. Ein solcher für den Antrieb (Traktion) vorgesehener Energiespeicher wird üblicherweise in Form einer Batterie, insbesondere in Form einer Hochvolt-Batterie mit einer Vielzahl von in Serie geschalteten Einzelzellen aufgebaut. Die bevorzugte Technologie derzeit ist hierbei eine elektrochemische Zelle in Form eines Lithium-Ionen-Akkumulators. Entsprechend dem üblichen Sprachgebrauch wird der Energiespeicher nachfolgend als Hochvolt-Batterie beziehungsweise Traktionsbatterie bezeichnet. Unter einer Hochvolt-Batterie wird hier entsprechend der üblichen Definition eine Batterie verstanden, deren Spannung größer oder gleich 60 Volt ist.

Gerade bei reinen Elektrofahrzeugen, bei denen die verfügbare Restreichweite durch den verbleibenden Energieinhalt in der Traktionsbatterie begrenzt ist, besteht bei größeren zurückzulegenden Strecken der Bedarf, die Traktionsbatterie unterwegs nachzuladen, wobei die hierfür aufzuwendende Ladezeit in der Größenordnung eines konventionellen Tankvorgangs mit flüssigen oder gasförmigen Brennstoffen angestrebt wird.

Da die Lithium-Ionen-Akkumulatoren schnellladefähig sind, das heißt innerhalb circa 15 Minuten 80 Prozent ihrer Kapazität geladen werden kann, werden vermehrt Schnellladeeinrichtungen zur Verfügung gestellt.

Heutzutage werden die Traktionsbatterien in den Elektrofahrzeugen (Battery Electric Vehicle, BEV) meistens direkt oder indirekt über das Fahrzeugklimatisierungssystem gekühlt wobei bei der direkten Variante das Kältemittel aus dem Fahrzeugklimatisierungssystem der Traktionsbatterie direkt zuströmt und diese direkt kühlt. Bei der indirekten Variante wird das Kühlmittel im Batteriekreislauf verwendet und für die Wärmeabfuhr wieder durch eine mit dem Kältemittelkreislauf verbundenen Kältemittel-Kühlmittel-Wärmetauscher (Chiller) auch rückgekühlt.

Übliche, derzeit eingesetzte Fahrzeugklimatisierungssysteme haben eine Kälteleistung von insgesamt circa 6 bis 8 Kilowatt. Diese Dimensionierung ist ausgelegt, die normalerweise für die Innenraumklimatisierung und die Batterietemperierung anfallende Kühlleistung aufzubringen. Aktuell wird eine Ladeinfrastruktur mit einer Schnellladetechnologie entwickelt, die eine Ladeleistung von 350 Kilowatt vorsieht und eine Traktionsbatterie innerhalb 15 Minuten auf 80 Prozent der Kapazität laden kann. Für diese Schnellladetechnologie reicht eine Batterietemperierung allein auf Basis des in dem Kraftfahrzeug installierten Fahrzeugklimatisierungssystems nicht mehr aus.

Hierzu ist aus der DE 11 2012 003 099 T5 eine Ladestation zur Schnellladung einer Elektrofahrzeugbatterie bekannt. Die Ladestation umfasst eine Ladequelle, die eine elektrische Ladung zur Verfügung stellt, eine Kühlmittelquelle, die Kühlmittel zur Verfügung stellt, und einen Anschluss, der sowohl einen Abschnitt für die elektrische Speisung zur Zuführung der elektrischen Ladung als auch einen Abschnitt für die Kühlmittelspeisung zur Zuführung des Kühlmittels umfasst. Der Anschluss kann mit einem Fahrzeug verbunden und dort angeschlossen werden.

Nachteilig an einem derartigen Konzept zur Kühlung einer Traktionsbatterie in einem Elektrofahrzeug ist der erhebliche Zusatzaufwand nicht nur auf Seiten der Ladestation, sondern auch auf Seiten der Elektrofahrzeuge, sowie die Notwendigkeit einer einheitlichen Schnittstelle.

In einem weiteren Zusammenhang ist aus der DE 10 2012 223 054 A1 ein Verfahren und System für das thermische Management einer Hochspannungsbatterie für ein Fahrzeug bekannt. Ein Steuergerät ist konfiguriert, um die Temperatur einer Traktionsbatterie auf innerhalb eines Betriebstemperaturbereichs zu regeln, wenn das Fahrzeug in Betrieb ist. Die Temperatur der Batterie wird auf innerhalb eines Ladetemperaturbereichs geregelt, wenn die Batterie mit dem Ladegerät und der Stromquelle verbunden und die Außentemperatur außerhalb eines Umgebungstemperaturbereichs liegt. Die Batterie wird auf eine Batterie-Antriebstemperatur vorkonditioniert, wenn die Außentemperatur außerhalb des Umgebungstemperaturbereichs liegt und die Batterie mit dem Ladegerät und der Stromquelle verbunden ist. Der Innenraum im Fahrzeug wird auf eine Innenraumtemperatur vorkonditioniert, wenn das Fahrzeug mit dem Ladegerät und der Stromquelle verbunden ist und die Außentemperatur außerhalb des Umgebungstemperaturbereichs liegt.

Überdies ist aus der DE 10 2016 104 065 A1 ein Verfahren bekannt, welches unter anderem ein automatisches Vorkonditionieren eines Fahrgastraums eines elektrifizierten Fahrzeugs während eines Gleichstrom-Schnellladevorgangs einer Batteriebaugruppe umfasst, wenn das elektrifizierte Fahrzeug ausgeschaltet ist.

Schließlich ist aus der EP 2 529 979 A1 ein Verfahren und eine Vorrichtung zum Anpassen einer Temperatur einer Fahrzeugbatterie bekannt. Dazu wird eine Temperaturregelung für die Fahrzeugbatterie während eines Fahrzeugbetriebs ausgeführt, um die Fahrzeugbatterie so anzusteuern, dass bei Beginn eines Ladevorgangs eine Batterietemperatur einer Zieltemperatur entspricht.

Es ist Aufgabe der vorliegenden Erfindung, ein Verfahren zum Betreiben einer Traktionsbatterie in einem Kraftfahrzeug, ein Batteriemanagementsystem zum Betreiben einer Traktionsbatterie in einem Kraftfahrzeug sowie ein Kraftfahrzeug bereitzustellen, durch welche der Aufwand zur Temperierung der Traktionsbatterie bei einem Schnellladevorgang reduziert werden kann.

Diese Aufgabe wird gelöst durch ein Verfahren mit den Merkmalen des Patentanspruchs 1, ein Batteriemanagementsystem mit den Merkmalen des Patentanspruchs 7 sowie durch ein Kraftfahrzeug mit den Merkmalen des Patentanspruchs 8 Vorteilhafte Weiterbildungen der vorliegenden Erfindung sind Gegenstand der abhängigen Patentansprüche.

Der Erfindung liegt die Erkenntnis zugrunde, dass während des Ladens einer Traktionsbatterie an einer Schnellladeeinrichtung mit 350 Kilowatt eine Verlustwärmeleistung von circa 17,5 Kilowatt in der Traktionsbatterie entwickelt wird, der einer auf der Seite des Kraftfahrzeugs installierten üblichen Kühlleistung in Höhe von circa 6 bis 8 Kilowatt gegenübersteht. Ein derartiges hohes Leistungsdefizit von circa 9,5 Kilowatt kann auch durch einen Technologiesprung in einem Fahrzeugklimatisierungssystem kaum gedeckt werden. Überdies liegt der Erfindung die weitere Erkenntnis zugrunde, dass die thermische Masse der Traktionsbatterie als Puffer ausgenutzt werden kann, um die entwickelte Verlustwärme während eines Schnellladevorgangs aufzunehmen, ohne einen vorgegebenen Temperaturbereich zu verlassen.

Die Erfindung geht aus von einem Verfahren zum Betreiben einer Traktionsbatterie in einem Kraftfahrzeug, wobei die Traktionsbatterie in einem Ladebetriebszustand mit einer Schnellladeeinrichtung geladen wird. Erfindungsgemäß wird das Verfahren weitergebildet durch Vorgeben einer an der Schnellladeeinrichtung nachzuladenden Energiemenge, Ermitteln einer zu erwartenden Erwärmung der Traktionsbatterie in Abhängigkeit von einer Ladeleistung, die unter Berücksichtigung einer vorgebbaren maximalen Ladedauer aus der nachzuladenden Energiemenge bestimmt wird, und Ermitteln einer Batterieladestarttemperatur derart, dass nach der Durchführung des Ladevorgangs an der Schnellladeeinrichtung eine Batteriebetriebstemperatur der Traktionsbatterie eine obere Batteriebetriebstemperaturgrenze nicht überschreitet. Das Verfahren umfasst des Weiteren Erfassen der Batteriebetriebstemperatur in einem Fahrbetriebszustand des Kraftfahrzeugs, und falls die erfasste Batteriebetriebstemperatur höher als die Batterieladestarttemperatur ist: Absenken der Batteriebetriebstemperatur auf die Batterieladestarttemperatur in dem Fahrbetriebszustand.

Weiterhin umfasst das Verfahren auch den Schritt: Ermitteln der Position der Schnellladeeinrichtung in Abhängigkeit von der Position des Kraftfahrzeugs und in Abhängigkeit von einer verfügbaren Restreichweite des Kraftfahrzeugs. Damit ist sichergestellt, dass nur eine solche Schnellladeeinrichtung ausgewählt wird, welche mit dem Kraftfahrzeug auch erreicht werden kann.

Weiterhin umfasst das Verfahren den weiteren Schritt: Abfragen von Zustandsinformationen der Schnellladeeinrichtung über ein mobiles Netzwerk und/oder Reservieren eines Ladezeitfensters an der Schnellladeeinrichtung. Die Vorteile des erfindungsgemäßen Verfahrens treten insbesondere unter Einbeziehung der modernen verfügbaren Infrastruktur zutage. Hierdurch kann das Betriebskonzept in der laufenden Ausführung angepasst und somit optimiert werden, es kann sich daher auf veränderte Parameter einstellen. Dies ist insbesondere dann von Vorteil, wenn mehrere mögliche Schnellladeeinrichtungen in Frage kommen und eine Verfügbarkeit, Kompatibilität mit dem Kraftfahrzeug etc. vorab geprüft werden muss. Zur Vermeidung von Wartezeiten und damit zur bestmöglichen Ausnutzung der durch die Erfindung bereitgestellten Vorteile des Schnellladevorgangs ist eine Reservierung eines Ladezeitfensters an der Schnellladeeinrichtung vorgesehen.

Durch die Anwendung des erfindungsgemäßen Verfahrens wird auch ein Schnellladevorgang mit einer Ladeleistung von 350 Kilowatt im Hinblick auf die Temperierung des Traktionsbatterie ohne zusätzlichen Aufwand bei der Ladeinfrastruktur realisierbar. Des Weiteren ist für ein batteriebetriebenes Kraftfahrzeug mit Schnellladefähigkeit das aktuelle Fahrzeugklimatisierungssystem weiter verwendbar, somit besteht keine Notwendigkeit, neue Klimatisierungssysteme zu entwickeln. Darüber hinaus ergibt sich eine massive Kosteneinsparung gegenüber dem aus dem Stand der Technik bekannten Konzept mit einer externen Kühlmittelzuführung, weil das erfindungsgemäß vorgeschlagene Verfahren auf derzeit bereits eingesetzten Komponenten realisiert werden kann, die entsprechend anzupassen sind, und keine zusätzliche Hardware benötigt wird.

Gemäß einer vorteilhaften Weiterbildung der Erfindung umfasst das Verfahren die weiteren Schritte Vergleichen der Batterieladestarttemperatur mit einer unteren Batteriebetriebstemperaturgrenze, und Limitieren der Batterieladestarttemperatur auf die untere Batteriebetriebstemperaturgrenze, wenn der Vergleich eine niedrigere Batterieladestarttemperatur als die untere Batteriebetriebstemperaturgrenze ergibt. Hierdurch wird vermieden, dass die Traktionsbatterie in einen Temperaturbereich heruntergekühlt wird, in dem diese nicht mehr oder nur noch mit Einschränkungen betrieben werden darf. Bevorzugt kann hierbei vorgesehen sein, dass bei einer notwendigen Begrenzung der Batterieladestarttemperatur auf die untere Batteriebetriebstemperaturgrenze die vorgegebene nachzuladende Energiemenge reduziert wird und/oder die vorgebbare Ladedauer verlängert wird. Eine derartige Anpassung der Parameter für den Schnellladebetrieb kann insbesondere unter Berücksichtigung von Präferenzen eines Benutzers, insbesondere eines Fahrers des Kraftfahrzeugs erfolgen. So kann beispielsweise vorgesehen sein, anstelle eines einzigen Zwischenstopps an einer Schnellladeeinrichtung zwei zeitlich voneinander beabstandete Zwischenstopps an zwei unterschiedlichen Schnellladeeinrichtungen vorzusehen, wobei das Zeitintervall in dem Fahrbetrieb zwischen dem ersten Zwischenstopp und dem darauffolgenden zweiten Zwischenstopp genutzt werden kann, um die durch den Schnellladevorgang erhöhte Batteriebetriebstemperatur wieder abzusenken.

Besonders vorteilhaft ist bei der Anwendung des Verfahrens vorgesehen, dass die obere Batteriebetriebstemperaturgrenze so gewählt wird, dass sich die Traktionsbatterie nicht nach Beendigung des Ladevorgangs in einem Temperaturbereich befindet, bei welchem die abgebbare Leistung schon reduziert, insbesondere deutlich reduziert ist. Dadurch ist sichergestellt, dass das Kraftfahrzeug nach Beendigung des Schnellladevorgangs unmittelbar in der Lage ist, in den Fahrbetriebszustand zu wechseln, das heißt der Fahrer des Kraftfahrzeugs kann nach dem "Tankvorgang" direkt weiterfahren.

Gemäß einer vorteilhaften Weiterbildung umfasst das Verfahren die weiteren Schritte: Ermitteln eines überschüssigen Kühlleistungsangebots in dem Fahrbetriebszustand, Ermitteln einer aus der Traktionsbatterie abzuführenden Wärmeenergiemenge in Abhängigkeit von der erfassten Batteriebetriebstemperatur und der Batterieladestarttemperatur sowie in Abhängigkeit von dem überschüssigen Kühlleistungsangebot und in Abhängigkeit von der abzuführenden Wärmeenergiemenge eine benötigte Temperaturabsenkungsdauer, Ermitteln einer voraussichtlichen Ankunftszeit bei der Schnellladeeinrichtung in Abhängigkeit von einer verbleibenden Restfahrstrecke bis zu der Schnellladeeinrichtung, und Starten des Absenkens der Batteriebetriebstemperatur spätestens zu einem Zeitpunkt, welcher aus der voraussichtlichen Ankunftszeit abzüglich der benötigten Temperaturabsenkungsdauer ermittelt wird.

Hierdurch wird sichergestellt, dass das Abkühlen der Traktionsbatterie rechtzeitig gestartet wird, um bei Ankunft bei der Schnellladeeinrichtung den Schnellladevorgang unmittelbar mit den vorgesehenen Startbedingungen ausführen zu können.

Gemäß einer vorteilhaften Weiterbildung umfasst das Verfahren den weiteren Schritt: Ermitteln der nachzuladenden Energiemenge in Abhängigkeit von einem in eine Navigationsvorrichtung des Kraftfahrzeugs eingegebenen Fahrtziel. Insbesondere erfolgt das Ermitteln der nachzuladenden Energiemenge in Abhängigkeit von der Position des Fahrtziels und/oder der Verfügbarkeit einer Ladeeinrichtung an der Position des Fahrtziels. Wenn die nachzuladende Energiemenge an einer einzigen Schnellladeeinrichtung aufgenommen werden soll und kein weiterer Zwischenstopp mehr bis zur Ankunft an dem Fahrtziel geplant ist, muss die nachzuladende Energiemenge selbstverständlich eine Reichweite des Kraftfahrzeugs ermöglichen, die zum Erreichen des Fahrtziels genügt.

Eine entsprechende Sicherheitsreserve zur Berücksichtigung einer Abweichung der Reichweitenprognose von der tatsächlichen Reichweite wird an dieser Stelle wie auch im Nachfolgenden immer stillschweigend vorausgesetzt, da auch unvorhergesehene Ereignisse wie beispielsweise nicht angekündigte Umleitungen einen Einfluss darauf haben können. Daneben ist selbstverständlich auch der zusätzliche Kühlleistungsbedarf zu berücksichtigen, welcher sich notwendigerweise aus der vorgesehenen Abkühlung der Traktionsbatterie durch das Klimatisierungssystem ergibt.

Daneben ist jedoch noch in vorteilhafter Weise zu berücksichtigen, ob sich an dem Ort des Fahrtziels eine Ladeeinrichtung befindet, welche ein Nachladen der Traktionsbatterie am Ort des Fahrtziels ermöglicht. Eine solche Ladeeinrichtung an der Position des Fahrtziels kann beispielsweise durch einen privaten oder öffentlich für Ladezwecke zugänglichen Stromnetzanschluss gegeben sein, beispielsweise 230 Volt Wechselspannung an einem Einphasenanschluss oder 400 Volt an einem Dreiphasenanschluss.

Gemäß einer vorteilhaften Weiterbildung umfasst das Verfahren die weiteren Schritte: Anzeige der Schnellladeeinrichtung, deren Position als innerhalb der Restreichweite des Kraftfahrzeugs liegend ermittelt wurde, an einen Benutzer des Kraftfahrzeugs, Bestätigen der Nutzungsabsicht der angezeigten Schnellladeeinrichtung durch den Benutzer, und Freigeben des Absenkens der Batteriebetriebstemperatur auf die Batterieladestarttemperatur durch ein Batteriemanagementsystem. Dadurch wird sichergestellt, dass das Absenken der Batteriebetriebstemperatur auf die Batterieladestarttemperatur nur dann ausgeführt wird, wenn tatsächlich eine konkrete Nutzungsabsicht durch den Fahrer des Kraftfahrzeugs vorliegt. Dadurch wird eine gegebenenfalls unnötige Verschwendung der in der Traktionsbatterie gespeicherten Energie vermieden, wenn der Fahrer gar nicht die Absicht hat, das Schnellladeverfahren an dieser Schnellladeeinrichtung in Anspruch zu nehmen. Alternativ kann nämlich vorgesehen sein, die Schnellladeeinrichtung lediglich mit einer gegenüber einer Standardladestation erhöhten Ladeleistung zu betreiben, die immer noch erheblich unterhalb der 15 Minuten Ladeleistung liegt, um beispielsweise während einer Mittagspause des Fahrers das Kraftfahrzeug für eine Stunde zu laden. In diesem Fall kann der Verlustleistungsbedarf vollständig aus dem bordeigenen Klimatisierungssystem abgeführt werden.

Gemäß einer vorteilhaften Ausführung erfolgt das Vorgeben der nachzuladenden Energiemenge als Differenz zwischen der maximal in einem Vollladezustand der Traktionsbatterie speicherbaren Energiemenge und einer in der Traktionsbatterie bei Erreichen der Schnellladeeinrichtung voraussichtlich verbleibenden Restenergiemenge. Dies entspricht quasi einem "Volltanken" der Traktionsbatterie. Somit wird durch einen derartigen Schnellladevorgang der größtmögliche Aktionsradius des Kraftfahrzeugs bereitgestellt.

Die Erfindung geht des Weiteren aus von einem Batteriemanagementsystem zum Betreiben einer Traktionsbatterie in einem Kraftfahrzeug, mit einer Steuereinheit, welche dazu ausgelegt ist, in einem Ladebetriebszustand die Aufladung der Traktionsbatterie mit einer Schnellladeeinrichtung zu steuern. Erfindungsgemäß wird das Batteriemanagementsystem weitergebildet durch einen Ladezustandssteller, welcher dazu ausgelegt ist, eine an der Schnellladeeinrichtung nachzuladende Energiemenge vorzugeben, eine Simulationsrecheneinheit zum Ermitteln einer zu erwartenden Erwärmung der Traktionsbatterie in Abhängigkeit von einer Ladeleistung, die unter Berücksichtigung einer vorgebbaren maximalen Ladedauer aus der nachzuladenden Energiemenge bestimmbar ist, wobei die Simulationsrecheneinheit dazu ausgelegt ist, eine Batterieladestarttemperatur derart zu ermitteln, dass nach der Durchführung des Ladevorgangs an der Schnellladeeinrichtung eine Batteriebetriebstemperatur der Traktionsbatterie eine obere Batteriebetriebstemperaturgrenze nicht überschreitet. Außerdem umfasst das Batteriemanagementsystem einen Temperatursensor zum Erfassen der Batteriebetriebstemperatur in einem Fahrbetriebszustand des Kraftfahrzeugs, und eine Batteriekühlvorrichtung, welche dazu ausgelegt ist, in dem Fahrbetriebszustand die Batteriebetriebstemperatur auf die Batterieladestarttemperatur abzusenken, falls die erfasste Batteriebetriebstemperatur höher als die Batterieladestarttemperatur ist. Zusätzlich zu dem Temperatursensor kann zumindest ein weiterer Temperatursensor vorgesehen sein. Die Batteriebetriebstemperatur kann bei einer Verwendung von mehreren Temperatursensoren als Minimalwert, als Maximalwert oder als arithmetischer Mittelwert der einzelnen durch die Temperatursensoren erfassten Werte gebildet sein.

Bevorzugt kann ein Kraftfahrzeug ein erfindungsgemäßes Batteriemanagementsystem umfassen, wodurch sich ein erfindungsgemäßes Kraftfahrzeug ergibt.

Gemäß einer vorteilhaften Weiterbildung umfasst das Kraftfahrzeug eine Navigationsvorrichtung, welche dazu ausgelegt ist, für die Ermittlung der nachzuladenden Energiemenge benötigte Ortsinformationen und/oder Positionsdaten oder daraus abgeleitete Daten an das Batteriemanagementsystem bereitzustellen.

Zu der Erfindung gehören auch Weiterbildungen des erfindungsgemäßen Batteriemanagementsystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Batteriemanagementsystems sowie eines erfindungsgemäßen Kraftfahrzeugs, welches ein derartiges Batteriemanagementsystem umfasst, hier nicht noch einmal beschrieben.

Im Folgenden sind Ausführungsbeispiele der Erfindung beschrieben. Hierzu zeigt:

Fig. 1  in vereinfachter schematischer Darstellung eine bevorzugte Ausführungsform eines erfindungsgemäßen Verfahrens;

Fig. 2  in vereinfachter schematischer Darstellung einen beispielhaften Verlauf einer Batteriebetriebstemperatur bei der Anwendung des erfindungsgemäßen Verfahrens; und

Fig. 3  in vereinfachter schematischer Darstellung eine bevorzugte Ausführungsform eines erfindungsgemäßen Batteriemanagementsystems.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

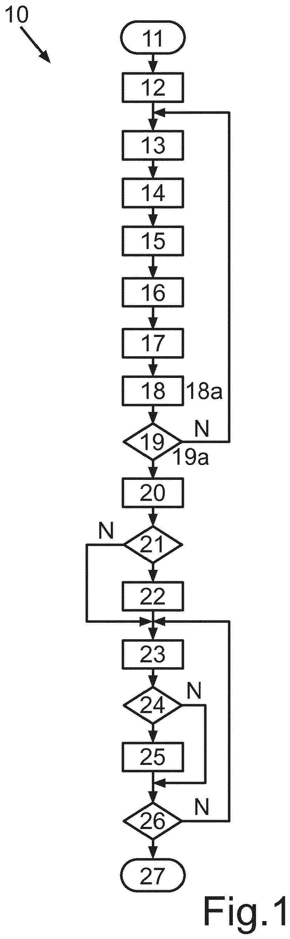

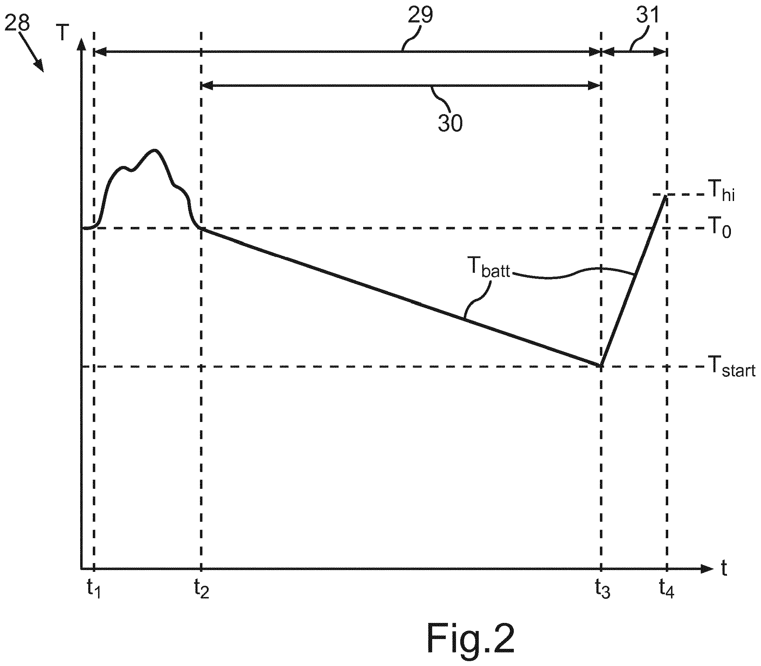

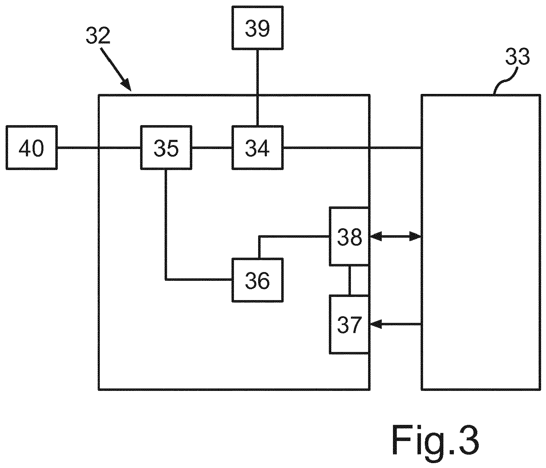

In einer bevorzugten Ausführungsform der Erfindung beginnt ein Verfahren 10 wie in der Fig. 1 dargestellt mit einem Start 11. Zur besseren Übersicht werden an dieser Stelle bereits Bezugszeichen eingeführt, die lediglich in den Fig. 2 beziehungsweise Fig. 3 enthalten sind. In einem Schritt 12 erfolgt die Eingabe eines Fahrziels durch einen Benutzer des Kraftfahrzeugs. Die Eingabe des Fahrziels erfolgt hierbei besonders bevorzugt unter Zuhilfenahme einer fahrzeugeigenen Navigationsvorrichtung 40.

In einem weiteren Schritt 13 folgt das Ermitteln der Position einer Schnellladeeinrichtung 39 in Abhängigkeit von der Position des Kraftfahrzeugs und in Abhängigkeit von einer verfügbaren Restreichweite des Kraftfahrzeugs. Das Ermitteln der Position der Schnellladeeinrichtung kann mithilfe der fahrzeugeigenen Navigationsvorrichtung 40 erfolgen, zusätzlich können weitere Daten beispielsweise unter Nutzung einer mobilen Internetverbindung ausgewertet werden.

In einem weiteren Schritt 14 wird die nachzuladende Energiemenge in Abhängigkeit von dem in die Navigationsvorrichtung des Kraftfahrzeugs angegebenen Fahrziel und weiteren Daten ermittelt. Dazu gehören insbesondere auch die Position des Fahrziels sowie die derzeitige Position des Kraftfahrzeugs, die als Grundlage für eine Abschätzung eines Restenergieinhalts in der Traktionsbatterie 33 benutzt werden kann, wenn das Kraftfahrzeug die Schnellladeeinrichtung 39 erreicht.

In einem weiteren Schritt 15 wird die an der Schnellladeeinrichtung 39 nachzuladende Energiemenge als Grundlage für weitere Berechnungen vorgegeben.

In einem weiteren Schritt 16 wird eine zu erwartende Erwärmung der Traktionsbatterie 33 in Abhängigkeit von einer Ladeleistung ermittelt, die unter Berücksichtigung einer vorgebbaren maximalen Ladedauer aus der nachzuladenden Energiemenge bestimmt wird.

In einem weiteren Schritt 17 folgt ein Ermitteln einer Batterieladestarttemperatur $T_{start}$ derart, dass nach der Durchführung des Ladevorgangs an der Schnellladeeinrichtung 39 eine Batteriebetriebstemperatur $T_{batt}$ der Traktionsbatterie 33 eine obere Batteriebetriebstemperaturgrenze $T_{hi}$ nicht überschreitet.

In einem weiteren Schritt 18 wird die Schnellladeeinrichtung 39, deren Position als innerhalb der Restreichweite des Kraftfahrzeugs liegend ermittelt wurde, an einen Benutzer des Kraftfahrzeugs angezeigt.

Der Benutzer hat nun in einem weiteren Schritt 19 die Möglichkeit, seine Nutzungsabsicht der angezeigten Schnellladeeinrichtung 39 zu bestätigen. Wenn der Benutzer die angezeigte Schnellladeeinrichtung 39 nicht ansteuern möchte, kann in den Verfahrensschritt 13 zurückgesprungen werden und eine andere Schnellladeeinrichtung 39 ermittelt werden. Abzweigungen nach einer Verzweigungsstelle, an denen eine Prüfung auf eine Bedingung ergibt, dass die Bedingung nicht erfüllt ist, sind in dem Flussdiagramm gemäß der Fig. 1 mit N gekennzeichnet.

Wenn der Benutzer in dem Schritt 19 bestätigt, erfolgt in dem darauffolgenden Schritt 20 die Freigabe des Absenkens der Batteriebetriebstemperatur $T_{batt}$ auf die Batterieladestarttemperatur $T_{start}$ durch ein Batteriemanagementsystem 32. Im Rahmen der Anzeige der Schnellladestation in dem Schritt 18 können auch weitere Zustandsinformationen der Schnellladeeinrichtung 39 in einem dazu parallelen Schritt 18a abgefragt werden. Dazu kann besonders vorteilhaft ein mobiles Netzwerk, beispielsweise ein über das Mobilfunknetz bereitgestellter Internetzugang verwendet werden. Entsprechend kann die Bestätigung durch den Benutzer des Kraftfahrzeugs in dem Schritt 19 durch einen weiteren parallelen Schritt 19a ergänzt werden, indem ein Ladezeitfenster an der Schnellladeeinrichtung 39 reserviert wird.

In einem weiteren Schritt 21 erfolgt nun das Vergleichen der Batterieladestarttemperatur $T_{start}$ mit einer unteren Batteriebetriebstemperaturgrenze, wobei in einem weiteren Schritt 22 die Batterieladestarttemperatur $T_{start}$ auf die untere Batteriebetriebstemperaturgrenze limitiert wird, wenn der Vergleich eine niedrigere Batterieladestarttemperatur $T_{start}$ als die untere Batteriebetriebstemperatur ergibt.

In einem weiteren Schritt 23 wird die Ist-Temperatur der Traktionsbatterie 33 in Form der Batteriebetriebstemperatur $T_{batt}$ in einem Fahrbetriebszustand 29 des Kraftfahrzeugs erfasst, und in einem darauffolgenden Schritt 24 geprüft, ob die erfasste Batteriebetriebstemperatur $T_{batt}$ höher ist als die Batterieladestarttemperatur $T_{start}$. Falls dies der Fall ist, wird die Batteriebetriebstemperatur $T_{batt}$ in einem darauffolgenden Schritt 25 auf die Batterieladestarttemperatur $T_{start}$ in dem Fahrbetriebszustand 29 abgesenkt.

Wenn in einem darauffolgenden Schritt 26 die Schnellladeeinrichtung 39 erreicht wird, kann das Kraftfahrzeug an diese angeschlossen werden. Damit ist der Fahrbetriebszustand 29 beendet (Ende 27) und ein Ladebetriebszustand 31 eingeleitet. In diesem Ladebetriebszustand 31 erfolgt nun ein Schnellladen der Traktionsbatterie 33, wie aus den nachfolgenden Ausführungen ersichtlich nunmehr mit maximaler verfügbarer Kühlleistung, wobei die Batteriebetriebstemperatur $T_{batt}$ innerhalb der Schnellladedauer rasch ansteigt.

Zur Erläuterung des Verfahrens ist in der Fig. 2 ein Graph 28 dargestellt, bei dem über der Zeit t die Temperatur T aufgetragen ist und ein beispielhafter Kurvenverlauf für die Batteriebetriebstemperatur $T_{batt}$ dargestellt ist. Zwischen einem ersten Zeitpunkt $t_1$ und einem zweiten Zeitpunkt $t_2$ findet ein normaler Fahrbetrieb in dem Fahrbetriebszustand 29 statt. Hier stellt sich in Abhängigkeit von den im Fahrbetrieb benötigten Leistungsanforderungen an die Traktionsbatterie 33 und der Parametrierung des Kühlkreislaufs (Batteriekühlvorrichtung 38) ein in einem bestimmten Rahmen frei variabler Temperaturverlauf ein. Zu dem zweiten Zeitpunkt $t_2$ wird entschieden, dass die nächste Schnellladeeinrichtung 39 anzufahren ist und es wird eine entsprechende Ladeleistung festgelegt, mit der an der Schnellladeeinrichtung 39 nachgeladen werden soll.

Ab dem zweiten Zeitpunkt $t_2$ wird nun die Batteriebetriebstemperatur $T_{batt}$ kontinuierlich abgesenkt auf den Wert der Batterieladestarttemperatur $T_{start}$, welcher zu einem dritten Zeitpunkt $t_3$ erreicht wird. Hier ist idealerweise zeitgleich die Ankunft an der Schnellladeeinrichtung 39 und der Beginn des Schnellladens anzusetzen. Die als Vorbereitungsphase 30 bezeichnete Zeit zwischen dem zweiten Zeitpunkt $t_2$ und dem dritten Zeitpunkt $t_3$ dient somit zur gezielten Vorbereitung der Traktionsbatterie 33 auf den geplanten Schnellladevorgang mit der maximal in dem Kraftfahrzeug verfügbaren Kühlleistung. Dabei gehört die Vorbereitungsphase 30 noch zu dem Fahrbetriebszustand 29, welche in der Darstellung gemäß der Fig. 2 zeitgleich zu dem Zeitpunkt $t_3$ endet, an den sich nahtlos der Ladebetriebszustand 31 anschließt.

Eine Anfangstemperatur $T_0$ ist hierbei der Wert der Batteriebetriebstemperatur $T_{batt}$ zu dem zweiten Zeitpunkt $t_2$. Insbesondere kann auch vorgesehen sein, dass die obere Batteriebetriebstemperaturgrenze $T_{hi}$ und die Anfangstemperatur $T_0$ gleich groß gewählt werden.

Das Schnellladen an der Schnellladeeinrichtung 39 ist zu einem vierten Zeitpunkt $t_4$ beendet. Am Ende des Schneeladevorgangs erreicht der Wert der Batteriebetriebstemperatur $T_{batt}$ wie vorgesehen gerade den Wert, der für die obere Batteriebetriebstemperaturgrenze $T_{hi}$ als Parameter vorgegeben wird.

Zur weiteren Erläuterung sind nachstehend einige Parameter mit ihren typischen Werten ergänzt. Eine angestrebte Ladeleistung für den Schnellladebetrieb beträgt 350 Kilowatt. Der maximale erreichte Wert der Batteriebetriebstemperatur $T_{batt}$ sollte nach dem Schnellladen nicht höher als bei 40 Grad Celsius liegen, weil unmittelbar nach dem Schnellladevorgang auch die Weiterfahrt noch mit angemessenen Fahrleistungen möglich sein soll. Somit sollte für eine zügige Weiterfahrt die obere Batteriebetriebstemperaturgrenze $T_{hi}$ idealerweise 40 Grad Celsius betragen. Ein typischer Wirkungsgrad einer Hochvolt-Batterie in der aktuell verfügbaren Lithium-Ionen-Technologie beträgt beim Schnellladen circa 95 Prozent. Damit werden 5 Prozent der eingespeisten Energie innerhalb der Hochvolt-Batterie in Verlustwärme umgesetzt. Eine für ein Kraftfahrzeug üblicherweise eingesetzte Lithium-Ionen-Batterie hat typischerweise eine Masse von circa 650 Kilogramm. Dies bezieht sich auf ein Elektrofahrzeug in Form eines Personenkraftwagens (Pkw). Die spezifische Wärmekapazität einer solchen Hochvolt-Batterie (Traktionsbatterie 33) beträgt gemittelt über deren verschiedene Bestandteile 1200 Joule pro Kilogramm und Kelvin. Als maximale Ladezeit für das Einspeichern von 80 Prozent der Batteriekapazität wird üblicherweise 15 Minuten angenommen. Als maximal verfügbare Kühlleistung über einen Kältemittelkreis (Batteriekühlvorrichtung 38) in dem Kraftfahrzeug werden 6 bis 8 Kilowatt veranschlagt.

Das erfindungsgemäße Verfahren kann somit anhand folgender Beispielsberechnung illustriert werden. Die Verlustwärmeleistung der Traktionsbatterie 33 beträgt bei Schnellladen mit 350 Kilowatt:

$$P_{Verlust} = 350\ Kilowatt \times (1 - 95\%) = 17,5\ Kilowatt.$$

Die aufzunehmende Wärmeleistung durch die thermische Masse der Traktionsbatterie 33 beträgt in dem Fall, wenn die Batterie von 25 Grad Celsius beim Schnellladen innerhalb von 15 Minuten bis auf eine Endtemperatur von 40 Grad Celsius erwärmt wird:

$$P_{therm} = \frac{650\ Kilogramm \times 1200\ Joule}{Kilogramm\ und\ Kelvin} \times \frac{40\ Grad\ Celsius - 25\ Grad\ Celsius)}{15\ Minuten \times 60\ Sekunden\ pro\ Minute} =$$

$$13\ Kilowatt$$

Dazu werden noch 4,5 Kilowatt während des Schnellladens von dem Fahrzeugkältemittelkreis benötigt, was innerhalb der maximal verfügbaren Kühlleistungskapazität (6-8 Kilowatt) liegt.

Die aufgeladene Energiemenge innerhalb der 15-minütigen Ladedauer mit einer Ladeleistung von 350 Kilowatt beträgt:

$$E_{aufgeladen} = \frac{350\ Kilowatt \times 15\ Minuten}{60\ Minuten\ pro\ Stunde} = 87,5\ Kilowattstunden$$

Diese Energiemenge reicht aus, um hiermit circa 350 Kilometer weiter zu fahren. 15 Minuten für den Aufladevorgang werden hier nur benötigt, wenn die Batterie vor dem Schnellladen fast vollständig leer war. Wenn die Traktionsbatterie 33 nur zur Hälfte leergefahren ist, muss mit dem Schnellladevorgang nur eine Energiemenge von circa 44 Kilowattstunden aufgeladen werden, woraus sich dann die folgende Ladezeit ergibt:

$$T_{Ladezeit} = \frac{44\ Kilowattstunden}{350\ Kilowatt} \times 60\ Minuten\ pro\ Stunde = 7,5\ Minuten.$$

Die Batterie muss nur bis zu 30 Grad Celsius während des Fahrbetriebszustands 29 heruntergekühlt werden, um nach dem Schnellladen die angestrebte Endtemperatur von 40 Grad Celsius nicht zu überschreiten.

$$T_0 = 40\ Grad\ Celsius - \frac{17,5\ Kilowatt \times 7,5\ Minuten \times 60\ Sekunden}{650\ Kilogramm \times \frac{1200\ Joule}{Kilogramm\ und\ Kelvin}}$$

$$= 30\ Grad\ Celsius$$

Bei diesen Ausgangsbedingungen wird während des Schnellladens keine zusätzliche Kühlleistung von dem Fahrzeugkältemittelkreis benötigt. Die Klimaanlage kann somit ausgeschaltet bleiben, was komfortabel und energiesparend ist.

Somit kann beispielsweise mit einer Traktionsbatterie 33 für ein Elektrofahrzeug mit einer Masse von 650 Kilogramm, was einem durchschnittlichen Wert aus heutiger Batterietechnologie und Reichweite entspricht, ausgehend von einer Batteriebetriebstemperatur $T_{batt}$, welche bei Ladebeginn bei 25 Grad Celsius und damit bei dem für die Batterieladestarttemperatur $T_{start}$ gewählten Wert liegt, eine konstante Verlustwärmeleistung von 13 Kilowatt durch die thermische Masse der Hochvolt-Batterie innerhalb von 15 Minuten aufgenommen werden. Nach einem 15-minütigen Ladevorgang landet somit die Batteriebetriebstemperatur $T_{batt}$ bei 40 Grad Celsius, was für das Weiterfahren unproblematisch ist. Zusätzlich mit der Kühlleistung aus dem Fahrzeugklimatisierungssystem von 6 bis 8 Kilowatt kann die gesamte Verlustwärmeleistung von 17,5 Kilowatt beim Schnellladen problemlos gedeckt werden.

Für eine sinnvolle Ermittlung des Zeitpunkts, ab wann die Hochvolt-Batterie gezielt in dem relativ tiefen Temperaturbereich abgekühlt werden muss, ist zweckmäßigerweise die Ladeinfrastruktur mit dem Kraftfahrzeug vernetzt. Somit kann das Fahrzeug mit entsprechender Betriebsstrategie die notwendigen Daten erhalten, wann die Batterie erschöpft ist, sowie wann und in welcher Ladestation mittels Schnellladen aufgeladen werden kann, ebenso welche Zeit dafür aufgewendet werden muss, die Traktionsbatterie 33 mit der momentan verfügbaren Kühlleistung in den gezielten Temperaturbereich abkühlen zu können. Diese Vernetzung mit der Ladeinfrastruktur lässt sich mit den derzeit bereits verfügbaren Mittels sehr einfach realisieren.

Ein bevorzugtes Ausführungsbeispiel eines erfindungsgemäßen Batteriemanagementsystems 32 ist in der Fig. 3 dargestellt. Das Batteriemanagementsystem 32 umfasst hierbei eine Steuereinheit 34, einen Ladezustandssteller 35, eine Simulationsrecheneinheit 36, einen Temperatursensor 37 sowie eine Batteriekühlvorrichtung 38.

Die Batteriekühlvorrichtung 38 ist hierbei thermisch mit einer Traktionsbatterie 33 gekoppelt, um die Batteriebetriebstemperatur $T_{batt}$ auf die Batterieladestarttemperatur $T_{start}$ in dem Fahrbetriebszustand 29 absenken zu können. Der Temperatursensor 37 dient zum Erfassen der Batteriebetriebstemperatur $T_{batt}$ in einem Fahrbetriebszustand 29 des Kraftfahrzeugs. Der Ladezustandssteller 35 ist mit einer Navigationsvorrichtung 40 gekoppelt, über welche er Daten zu der geplanten Fahrtroute sowie zu weiteren auf der Fahrtstrecke relevanten Daten wie beispielsweise die Verteilung von Ladeeinrichtungen erhält. Die Steuereinheit 34 dient dazu, in dem Ladebetriebszustand 31 die Aufladung der Traktionsbatterie 33 mit einer Schnellladeeinrichtung 39 zu steuern, unter Berücksichtigung der von dem Ladezustandssteller 35 vorgegebenen nachzuladenden Energiemenge. Die Simulationsrecheneinheit 36 dient zum Ermitteln einer zu erwartenden Erwärmung der Traktionsbatterie 33 in Abhängigkeit von einer Ladeleistung, die unter Berücksichtigung einer vorgebbaren maximalen Ladedauer aus der nachzuladenden Energiemenge bestimmbar ist. Die Batterieladestarttemperatur $T_{start}$ kann von der Simulationsrecheneinheit 36 als Sollwert an die Batteriekühlvorrichtung 38 bereitgestellt werden, wo sie mit einem Istwert in Form der Batteriebetriebstemperatur $T_{batt}$, welcher von dem Temperatursensor 37 geliefert wird, verglichen werden kann und im Falle einer Überschreitung eine Absenkung der Batterietemperatur vorgenommen wird.

Insgesamt zeigen die Beispiele, wie durch die Erfindung ein Konzept zur Temperierung der Hochvolt-Batterien in Elektrofahrzeugen während eines Schnellladens mit einem geringen Zusatzaufwand im Vergleich zu einem Standardladevorgang realisiert werden kann. Somit kann eine optimierte Betriebsstrategie für Elektrofahrzeuge entwickelt werden, bei der die Hochvolt-Batterie kurz vor dem Schnellladen gezielt in einen relativ tiefen Temperaturbereich - beispielsweise circa 20 bis 25 Grad Celsius - während des Fahrens mit verfügbarer Kühlleistung durch das Fahrzeugklimatisierungssystem abgekühlt und gehalten wird.

**Patentansprüche**

1.   Verfahren (10) zum Betreiben einer Traktionsbatterie (33) in einem Kraftfahrzeug, wobei die Traktionsbatterie (33) in einem Ladebetriebszustand (31) mit einer Schnellladeeinrichtung (39) geladen wird,

folgende Schritte umfassend:

- (15) Vorgeben einer an der Schnellladeeinrichtung (39) nachzuladenden Energiemenge,
- (16) Ermitteln einer zu erwartenden Erwärmung der Traktionsbatterie (33) in Abhängigkeit von einer Ladeleistung, die unter Berücksichtigung einer vorgebbaren maximalen Ladedauer aus der nachzuladenden Energiemenge bestimmt wird,
- (17) Ermitteln einer Batterieladestarttemperatur ($T_{start}$) derart, dass nach der Durchführung des Ladevorgangs an der Schnellladeeinrichtung (39) eine Batteriebetriebstemperatur ($T_{batt}$) der Traktionsbatterie (33) eine obere Batteriebetriebstemperaturgrenze ($T_{hi}$) nicht überschreitet,
- (23) Erfassen der Batteriebetriebstemperatur ($T_{batt}$) in einem Fahrbetriebszustand (29) des Kraftfahrzeugs, und
- (24) falls die erfasste Batteriebetriebstemperatur ($T_{batt}$) höher als die Batterieladestarttemperatur ($T_{start}$) ist: (25) Absenken der Batteriebetriebstemperatur ($T_{batt}$) auf die Batterieladestarttemperatur ($T_{start}$) in dem Fahrbetriebszustand (29),

**gekennzeichnet durch**:

- (13) Ermitteln der Position der Schnellladeeinrichtung (39) in Abhängigkeit von der Position des Kraftfahrzeugs und in Abhängigkeit von einer verfügbaren Restreichweite des Kraftfahrzeugs mittels einer fahrzeugeigenen Navigationsvorrichtung (40), und
- Abfragen von Zustandsinformationen der Schnellladeeinrichtung (39) über ein mobiles Netzwerk und/oder (19a) Reservieren eines Ladezeitfensters an der Schnellladeeinrichtung (39), wobei die Zustandsinformationen der Schnellladeeinrichtung (39) zumindest eine Verfügbarkeit und/oder eine Kompatibilität der Schnellladeeinrichtung (39) mit dem Kraftfahrzeug darstellen.

2. Verfahren nach Anspruch 1,
**gekennzeichnet durch**:

- (21) Vergleichen der Batterieladestarttemperatur ($T_{start}$) mit einer unteren Batteriebetriebstemperaturgrenze, und
- (22) Limitieren der Batterieladestarttemperatur ($T_{start}$) auf die untere Batteriebetriebstemperaturgrenze, wenn der Vergleich eine niedrigere Batterieladestarttemperatur ($T_{start}$) als die untere Batteriebetriebstemperaturgrenze ergibt.

3. Verfahren nach einem der vorhergehenden Ansprüche,
**gekennzeichnet durch**:

- Ermitteln eines überschüssigen Kühlleistungsangebots in dem Fahrbetriebszustand (29),
- Ermitteln einer aus der Traktionsbatterie (33) abzuführenden Wärmeenergiemenge in Abhängigkeit von der erfassten Batteriebetriebstemperatur ($T_{batt}$) und der Batterieladestarttemperatur ($T_{start}$) sowie in Abhängigkeit von dem überschüssigen Kühlleistungsangebot und in Abhängigkeit von der abzuführenden Wärmeenergiemenge eine benötigte Temperaturabsenkungsdauer,
- Ermitteln einer voraussichtlichen Ankunftszeit ($t_3$) bei der Schnellladeeinrichtung (39) in Abhängigkeit von einer verbleibenden Restfahrstrecke bis zu der Schnellladeeinrichtung (39),
- Starten des Absenkens der Batteriebetriebstemperatur ($T_{batt}$) spätestens zu einem Zeitpunkt ($t_2$), welcher aus der voraussichtlichen Ankunftszeit abzüglich der benötigten Temperaturabsenkungsdauer ermittelt wird.

4. Verfahren nach einem der vorhergehenden Ansprüche,
**gekennzeichnet durch**:

- (14) Ermitteln der nachzuladenden Energiemenge in Abhängigkeit von einem in eine Navigationsvorrichtung (40) des Kraftfahrzeugs eingegebenen Fahrtziel.

5. Verfahren nach einem der vorhergehenden Ansprüche,
**gekennzeichnet durch**:

- (18) Anzeigen der Schnellladeeinrichtung (39), deren Position als innerhalb der Restreichweite des Kraftfahrzeugs liegend ermittelt wurde, an einen Benutzer des Kraftfahrzeugs,
- (19) Bestätigen der Nutzungsabsicht der angezeigten Schnellladeeinrichtung (39) durch den Benutzer,
- (20) Freigeben des Absenkens der Batteriebetriebstemperatur ($T_{batt}$) auf die Batterieladestarttemperatur ($T_{start}$) durch ein Batteriemanagementsystem (32).

6. Verfahren nach einem der vorhergehenden Ansprüche,
**gekennzeichnet durch**:

- Vorgeben der nachzuladenden Energiemenge als Differenz zwischen der maximal in einem Vollladezustand der Traktionsbatterie (33) speicherbaren Energiemenge und einer in der Traktionsbatterie (33) bei Erreichen der Schnellladeeinrichtung (39) voraussichtlich verbleibenden Restenergiemenge.

7. Batteriemanagementsystem (32) zum Betreiben einer Traktionsbatterie (33) in einem Kraftfahrzeug, mit

- einer Steuereinheit (34), welche dazu ausgelegt ist, in einem Ladebetriebszustand (31) die Aufladung der Traktionsbatterie (33) mit einer Schnellladeeinrichtung (39) zu steuern,

weiterhin umfassend:

- einen Ladezustandssteller (35), welcher dazu ausgelegt ist, eine an der Schnellladeeinrichtung (39) nachzuladende Energiemenge vorzugeben,
- eine Simulationsrecheneinheit (36) zum Ermitteln einer zu erwartenden Erwärmung der Traktionsbatterie (33) in Abhängigkeit von einer Ladeleistung, die unter Berücksichtigung einer vorgebbaren maximalen Ladedauer aus der nachzuladenden Energiemenge bestimmbar ist,
- wobei die Simulationsrecheneinheit (36) dazu ausgelegt ist, eine Batterieladestarttemperatur ($T_{start}$) derart zu ermitteln, dass nach der Durchführung des Ladevorgangs an der Schnellladeeinrichtung (39) eine Batteriebetriebstemperatur ($T_{batt}$) der Traktionsbatterie (33) eine obere Batteriebetriebstemperaturgrenze ($T_{hi}$) nicht überschreitet,
- einen Temperatursensor (37) zum Erfassen der Batteriebetriebstemperatur ($T_{batt}$) in einem Fahrbetriebszustand (29) des Kraftfahrzeugs, und
- eine Batteriekühlvorrichtung (38), welche dazu ausgelegt ist, in dem Fahrbetriebszustand (29) die Batteriebetriebstemperatur ($T_{batt}$) auf die Batterieladestarttemperatur ($T_{start}$) abzusenken, falls die erfasste Batteriebetriebstemperatur ($T_{batt}$) höher als die Batterieladestarttemperatur ($T_{start}$) ist,

**dadurch gekennzeichnet, dass**
dem Batteriemanagementsystem (32) ausgebildet ist, von einer fahrzeugeigene Navigationseinrichtung (40) eine in Abhängigkeit von der Position des Kraftfahrzeugs und in Abhängigkeit von einer verfügbaren Restreichweite des Kraftfahrzeugs ermittelte Position der Schnellladeeinrichtung (39) zum Bestimmen der nachzuladenden Energiemenge zu empfangen, und
Zustandsinformationen der Schnellladeeinrichtung (39) über ein mobiles Netzwerk abzufragen und/oder (19a) ein Ladezeitfenster an der Schnellladeeinrichtung zu reservieren), wobei die Zustandsinformationen der Schnellladeeinrichtung (39) zumindest eine Verfügbarkeit und/oder eine Kompatibilität der Schnellladeeinrichtung (39) mit dem Kraftfahrzeug darstellen.

8. Kraftfahrzeug mit einem Batteriemanagementsystem (32) nach Anspruch 7.

## Claims

1. Method (10) for operating a traction battery (33) in a motor vehicle, wherein the traction battery (33) is charged in a charging operating state (31) with a fast-charging device (39),

comprising the following steps:

- (15) specifying an amount of energy that is to be recharged at the fast-charging device (39),
- (16) determining an anticipated heating of the traction battery (33) depending on a charging power, which is determined taking into consideration a predetermined maximum charging time from the amount of energy that is to be recharged,
- (17) determining a battery charging start temperature ($T_{start}$) in such a way that after carrying out the charging operation at the fast-charging device, (39) a battery operating temperature ($T_{batt}$) of the traction battery (33) does not exceed a battery operating temperature upper limit ($T_{hi}$),
- (23) determining the battery operating temperature ($T_{batt}$) in a driving operation state (29) of the motor vehicle, and
- (24) if the determined battery operating temperature ($T_{batt}$) is higher than the battery charging start tem-perature ($T_{start}$): (25) reducing the battery operating temperature ($T_{batt}$) to the battery charging start tem-perature ($T_{start}$) in the driving operation state (29),

**characterised by**:

- (13) determining the position of the fast-charging device (39) depending on the position of the motor vehicle and depending on an available remaining range of the motor vehicle, by means of an in-vehicle navigation device (40), and
- querying status information of the fast-charging device (39) via a mobile network and/or (19a) reserving a charging time time window on the fast-charging device (39), wherein the status information of the fast-charging device (39) represents at least an availability and/or a compatibility of the fast-charging device (39) with the motor vehicle.

2. Method according to claim 1,
   **characterised by**:

   - (21) comparing the battery charging start temperature ($T_{start}$) with a battery operating temperature lower limit, and
   - (22) limiting the battery charging start temperature ($T_{start}$) to the battery operating temperature lower limit, if the comparison results in a battery charging start temperature ($T_{start}$) lower than the battery operating temperature limit.

3. Method according to any of the preceding claims,
   **characterised by**:

   - determining an excess cooling power supply in the driving operation state (29),
   - determining an amount of heat energy to be dissipated from the traction battery (33) depending on the detected battery operation temperature ($T_{batt}$) and the battery charging start temperature ($T_{start}$), as well as a required temperature reduction period depending on the excess cooling power supply and depending on the amount of heat energy to be dissipated,
   - determining an estimated time of arrival ($t_3$) at the fast-charging device (39) depending on a remaining driving route to the fast-charging device (39),
   - starting the reduction of the battery operation temperature ($T_{batt}$) at the latest at the point in time ($t_2$) which is determined from the estimated time of arrival minus the required temperature reduction period.

4. Method according to any of the preceding claims,
   **characterised by**:

   - (14) determining the amount of energy that is to be recharged depending on a destination entered in a navigation device (40) of the motor vehicle.

5. Method according to any of the preceding claims,
   **characterised by**:

   - (18) displaying, to the user of the motor vehicle, the fast-charging device (39), the position of which was determined to be within the remaining range of the motor vehicle,
   - (19) confirming, by the user, the intention to use the displayed fast-charging device (39),
   - (20) enabling the reduction of the battery operation temperature ($T_{batt}$) to the battery charging start temperature ($T_{start}$) by a battery management system (32).

6. Method according to any of the preceding claims,
   **characterised by**:

   - specifying the amount of energy that is to be recharged as the difference between the maximum amount of energy that can be stored in a fully charged state of the traction battery (33) and an estimated likely remaining amount of energy in the traction battery (33) on reaching the fast-charging device (39).

7. Battery management system (32) for operating a traction battery (33) in a motor vehicle, comprising

   - a controller (34) that is designed to control the charging of the traction battery (33) with a fast-charging device (39), in a charging operation state (31),
   further comprising:

   - a state of charge adjuster (35), which is designed to specify an amount of energy that is to be recharged at the fast-charging device (39),
   - a simulation computing unit (36) for determining an anticipated heating of the traction battery (33) depending on a charging capacity, which can be determined taking into consideration a maximum charging time that can be predetermined from the amount of energy that is to be recharged,

wherein the simulation computing unit (36) is designed to determine a battery charging start temperature ($T_{start}$) in such a way that after carrying out the charging operation at the fast-charging device (39) a battery operation temperature ($T_{batt}$) of the traction battery (33) does not exceed a battery operating temperature upper limit ($T_{hi}$),

- a temperature sensor (37) for detecting the battery operation temperature ($T_{batt}$) in a driving operation state (29) of the motor vehicle, and
- a battery cooling device (38), which is designed, in the driving operation state (29), to reduce the battery operation temperature ($T_{batt}$) to the battery charging start temperature ($T_{start}$), if the detected battery operation temperature ($T_{batt}$) is higher than the battery charging start temperature ($T_{start}$),

**characterised in that**
the battery management system (32) is designed to receive, from an in-vehicle navigation device (40), a position of the fast-charging device (39) determined depending on the position of the motor vehicle and depending on an available remaining range of the motor vehicle, in order to determine the amount of energy that is to be recharged, and
querying status information of the fast-charging device (39) via a mobile network and/or (19a) reserving a charging time time window at the fast-charging device), wherein status information of the fast-charging device (39) represents at least an availability and/or a compatibility of the fast-charging device (39) with the motor vehicle.

8. Motor vehicle with a battery management system (32) according to claim 7.

**Revendications**

1. Procédé (10) pour faire fonctionner une batterie de propulsion (33) dans un véhicule automobile, dans lequel la batterie de propulsion (33) est chargée dans un état de mode de charge (31) avec un dispositif de charge rapide (39),

comprenant les étapes suivantes :

- (15) spécifier une quantité d'énergie à recharger sur le dispositif de charge rapide (39),
- (16) établir un réchauffement attendu de la batterie de propulsion (33) en fonction d'une capacité de charge qui est déterminée en prenant en compte une durée de charge maximale pouvant être prédéterminée à partir de la quantité d'énergie à recharger,
- (17) établir une température de début de charge de batterie ($T_{start}$) de telle sorte qu'après la réalisation de l'opération de recharge sur le dispositif de charge rapide (39) une température de fonctionnement de batterie ($T_{batt}$) de la batterie de propulsion (33) ne dépasse pas une limite de température de fonctionnement de batterie supérieure (TN),
- (23) saisie de la température de fonctionnement de batterie ($T_{batt}$) dans un état de fonctionnement de conduite (29) du véhicule automobile, et
- (24) si la température de fonctionnement de batterie saisie ($T_{batt}$) est supérieure à la température de début de charge de batterie ($T_{start}$) : (25) réduction de la température de fonctionnement de batterie ($T_{batt}$) à la température de début de charge de batterie ($T_{start}$) à l'état de fonctionnement de conduite (29),

**caractérisé par** :

- (13) l'établissement de la position du dispositif de charge rapide (39) en fonction de la position du véhicule automobile et en fonction d'une autonomie restante disponible du véhicule automobile au moyen d'un système de navigation propre au véhicule (40), et
- la demande d'informations d'état du dispositif de charge rapide (39) par l'intermédiaire d'un réseau mobile et/ou (19a) la réserve d'une fenêtre temporelle de charge sur le dispositif de charge rapide (39), dans lequel les informations d'état du dispositif de charge rapide (39) représentent au moins une disponibilité et/ou une compatibilité du dispositif de charge rapide (39) avec le véhicule automobile.

2. Procédé selon la revendication 1,
**caractérisé par** :

- (21) la comparaison de la température de début de charge de batterie ($T_{start}$) avec une limite de température de fonctionnement de batterie inférieure, et

- (22) la limitation de la température de début de charge de batterie ($T_{start}$) à la limite de température de fonctionnement de batterie inférieure, lorsque la comparaison indique une température de début de charge de batterie inférieure ($T_{start}$) à la limite de température de fonctionnement de batterie.

3. Procédé selon l'une quelconque des revendications précédentes, **caractérisé par** :

- l'établissement d'une offre de capacité de refroidissement dans l'état de fonctionnement du véhicule (29),
- l'établissement d'une quantité d'énergie de chaleur à évacuer de la batterie de propulsion (33) en fonction de la température de fonctionnement de batterie saisie ($T_{batt}$) et de la température de début de charge de batterie ($T_{start}$) ainsi qu'en fonction de l'offre de capacité de refroidissement excédentaire et en fonction de la quantité d'énergie de chaleur à évacuer, une durée de réduction de température nécessaire,
- l'établissement d'un temps d'arrivée prévu ($t_3$) pour le dispositif de charge rapide (39) en fonction d'un trajet restant jusqu'au dispositif de charge rapide (39),
- le début de la réduction de la température de fonctionnement de batterie ($T_{batt}$) au plus tard à un moment ($t_2$) qui est établi à partir du temps d'arrivée prévu moins la durée de réduction de température nécessaire.

4. Procédé selon l'une quelconque des revendications précédentes, **caractérisé par** :

- (14) l'établissement de la quantité d'énergie à recharger en fonction d'un objectif de conduite indiqué dans un système de navigation (40) du véhicule automobile.

5. Procédé selon l'une quelconque des revendications précédentes, **caractérisé par** :

- (18) l'affichage du dispositif de charge rapide (39) dont la position a été établie comme se situant dans la distance à parcourir du véhicule automobile, à un utilisateur du véhicule automobile,
- (19) la confirmation de l'utilisation projetée du dispositif de charge rapide (39) affiché par l'utilisateur,
- (20) la libération de la réduction de la température de fonctionnement de batterie ($T_{batt}$) à la température de début de charge de batterie ($T_{start}$) par un système de gestion de batterie (32).

6. Procédé selon l'une quelconque des revendications précédentes, **caractérisé par** :

- la spécification de la quantité d'énergie à recharger en tant que différence entre la quantité d'énergie pouvant être stockée au maximum dans un état de charge totale de la batterie de propulsion (33) et une quantité d'énergie restante prévue dans la batterie de propulsion (33) lorsque le dispositif de charge rapide (39) est atteint.

7. Système de gestion de batterie (32) pour faire fonctionner une batterie de propulsion (33) dans un véhicule automobile, avec

- un dispositif de commande (34) qui est conçu pour commander dans un état de fonctionnement de charge (31) le chargement de la batterie de propulsion (33) avec un dispositif de charge rapide (39),
comprenant en outre :

- un organe de réglage d'état de charge (35) qui est conçu pour spécifier une quantité d'énergie à recharger sur le dispositif de charge rapide (39),
- une unité de calcul de simulation (36) pour établir un réchauffement attendu de la batterie de propulsion (33) en fonction d'une capacité de charge qui est déterminée en prenant en compte une durée de charge maximale pouvant être prédéterminée à partir de la quantité d'énergie à recharger,

dans lequel l'unité de calcul de simulation (36) est conçue pour établir une température de début de charge de batterie ($T_{start}$) de telle sorte qu'après la réalisation de l'opération de recharge sur le dispositif de charge rapide (39) une température de fonctionnement de batterie ($T_{batt}$) de la batterie de propulsion (33) ne dépasse pas une limite de température de fonctionnement de batterie ($T_{hi}$) supérieure,

- un capteur de température (37) pour saisir la température de fonctionnement de batterie ($T_{batt}$) dans un état de fonctionnement de conduite (29) du véhicule automobile, et
- un dispositif de refroidissement de batterie (38) qui est conçu pour réduire dans l'état de fonctionnement de conduite (29) la température de fonctionnement de batterie ($T_{batt}$) à la température de début de charge de batterie ($T_{start}$) si la température de fonctionnement de batterie saisie ($T_{batt}$) est supérieure à la température de début de charge de batterie ($T_{start}$),

**caractérisé en ce que**
le système de gestion de batterie (32) est formé pour recevoir une position du dispositif de charge rapide (39) par un système de navigation propre au véhicule (40) en fonction de la position du véhicule automobile et en fonction d'une autonomie restante disponible du véhicule automobile pour déterminer la quantité d'énergie à recharger, et demander des informations d'état du dispositif de charge rapide (39) par l'intermédiaire d'un réseau mobile et/ou (19a) réserver une fenêtre temporelle de charge sur le dispositif de charge rapide, dans lequel les informations d'état du dispositif de charge rapide (39) représentent au moins une disponibilité et/ou une compatibilité du dispositif de charge rapide (39) avec le véhicule automobile.

8. Véhicule automobile avec un système de gestion de batterie (32) selon la revendication 7.

Fig.1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112012003099 T5
- DE 102012223054 A1
- DE 102016104065 A1
- EP 2529979 A1